(19) Europäisches Patentamt European Patent Office Office européen des brevets

(11) **EP 4 779 886 A1**

(12) **EUROPEAN PATENT APPLICATION**
published in accordance with Art. 153(4) EPC

(43) Date of publication:
**22.07.2026 Bulletin 2026/30**

(21) Application number: **24870322.5**

(22) Date of filing: **29.08.2024**

(51) International Patent Classification (IPC):
**H04B 7/0456** (2017.01)     **H04B 7/06** (2006.01)

(52) Cooperative Patent Classification (CPC):
**H04B 7/0456; H04B 7/06**

(86) International application number:
**PCT/CN2024/115623**

(87) International publication number:
**WO 2025/066776 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311283590**

(71) Applicant: **HUAWEI TECHNOLOGIES CO., LTD.
Shenzhen 518129 (CN)**

(72) Inventors:
• ZHAO, Guankai
  Shenzhen, Guangdong 518129 (CN)
• LE, Chunhui
  Shenzhen, Guangdong 518129 (CN)
• WANG, Zhiyong
  Shenzhen, Guangdong 518129 (CN)
• JIANG, Meng
  Shenzhen, Guangdong 518129 (CN)

(74) Representative: **MERH-IP Matias Erny Reichl Hoffmann
Patentanwälte PartG mbB
Paul-Heyse-Straße 29
80336 München (DE)**

(54) **COMMUNICATION METHOD AND COMMUNICATION APPARATUS**

(57)     This application provides a communication method and a communication apparatus. The method includes: A network device sends a channel state information reference signal CSIRS to a terminal device, where the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels. Further, the network device receives channel state information CSI from the terminal device. According to the method, the quantity of transmit ports of CSIRS is not limited by a quantity of numerical channels of the network device. This helps improve feedback accuracy of the CSI.

```
┌──────────────┐                    ┌──────────────┐
│Network device│                    │Terminal device│
└──────┬───────┘                    └──────┬───────┘
       │ S201: CSIRS processed by using a first weight matrix
       │─────────────────────────────────▶│
       │                            ┌──────┴──────────────────┐
       │                            │S202: Measure the CSIRS to│
       │                            │obtain CSI                │
       │                            └──────┬──────────────────┘
       │         S203: CSI                 │
       │◀──────────────────────────────────│
       │                                   │
```

FIG. 2

## Description

This application claims priority to Chinese Patent Application No. 202311283590.9, filed with the China National Intellectual Property Administration on September 28, 2023 and entitled "COMMUNICATION METHOD AND COMMUNICATION APPARATUS", which is incorporated herein by reference in its entirety.

## TECHNICAL FIELD

This application relates to the field of communication technologies, and in particular, to a communication method and a communication apparatus.

## BACKGROUND

Amplitudes and phases of transceiver units of antennas are adjusted by using a precoding technology, so that transmitted/received signals of an antenna array are coherently superimposed in a specific direction, and signals in other directions are mutually canceled. A codebook-based precoding technology is used as an example. A network device sends a channel state information reference signal (channel state information reference signal, CSIRS) to a terminal device. The terminal device performs measurement based on the CSIRS, and reports, to the network device, channel state information (channel state information, CSI) obtained through measurement. The CSI includes a precoding matrix indicator (precoding matrix indicator, PMI). Subsequently, the network device processes a to-be-sent signal based on a precoding matrix indicated by the PMI, so that a precoded to-be-sent signal adapts to a channel.

In a multiple-input multiple-output (multiple-input multiple-output, MIMO) system, a transmit end and a receive end respectively use a plurality of transmitter (transmitter, T) antennas and a plurality of receiver (receiver, R) antennas for signal transmission. Generally, the CSIRS transmitted by the network device to the terminal device is a CSIRS weighted by using a weight matrix W.

The weight matrix W of the CSIRS affects, to some extent, feedback accuracy of the CSI subsequently fed back by the terminal device. In the MIMO system, specifying a weight matrix W that is used to weight the CSIRS to improve the feedback accuracy of the CSI is an urgent problem to be resolved.

## SUMMARY

Embodiments of this application provide a communication method and a communication apparatus, to help improve flexibility of a reference signal burst periodicity, so as to help improve feedback accuracy of channel state information.

According to a first aspect, this application provides a communication method. An example in which a network device performs the method is used. The method includes: The network device sends a channel state information reference signal CSIRS to a terminal device, where the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels. Further, the network device receives channel state information CSI from the terminal device.

In the method described in the first aspect, the quantity of transmit ports of the CSIRS is not limited by the quantity of digital channels of the network device (that is, the quantity of transmit ports of the CSIRS may be greater than the quantity of digital channels). Compared with a solution in which the quantity of transmit ports of the CSIRS is limited by the quantity of digital channels of the network device (that is, the quantity of transmit ports of the CSIRS is less than or equal to the quantity of digital channels), the method helps improve feedback accuracy of the CSI of the terminal device.

In a possible implementation, that the quantities of rows and columns of the first weight matrix are related to the quantity of transmit ports of the CSIRS and the quantity of digital channels of the network device includes: The quantity of rows of the first weight matrix is equal to the quantity of digital channels of the network device, and the quantity of columns of the first weight matrix is equal to the quantity of transmit ports of the CSIRS; or the quantity of columns of the first weight matrix is equal to the quantity of digital channels of the network device, and the quantity of rows of the first weight matrix is equal to the quantity of transmit ports of the CSIRS.

In a possible implementation, the CSI includes a precoding matrix indicator PMI. Further, the network device obtains a second weight matrix based on the first weight matrix and a precoding matrix indicated by the PMI, where the second weight matrix is used for processing a signal to be sent to the terminal device. The possible implementation helps improve phase precision or amplitude quantization precision of the second weight matrix, to help improve performance of processing a signal by using the second weight matrix.

In a possible implementation, the second weight matrix is a product of the first weight matrix and the precoding matrix indicated by the PMI.

In a possible implementation, the first weight matrix includes a plurality of element values, and the element values included in the first weight matrix are related to one or more of the following information: a codebook type corresponding to the terminal device, the quantity of digital channels of the network device, the quantity of transmit ports of the CSIRS, communication environment information of the terminal device, a phase precision requirement for the second weight matrix, and/or an amplitude quantization requirement for the second weight matrix.

In a possible implementation, the quantity of transmit ports of the CSIRS is 8, and the quantity of digital channels is 4.

In a possible implementation, the quantity of rows of the first weight matrix is 4, the quantity of columns of the first weight matrix is 8, and the first weight matrix is any one of the following:

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix}; \text{ or } \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix}; \text{ or } \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or $[Q_1\ Q_2]$, where $Q_1$ is a unitary matrix with four rows and four columns, and $Q_2$ is a unitary matrix with four rows and four columns.

In a possible implementation, the quantity of transmit ports of the CSIRS is 8, and the quantity of digital channels is 2.

In a possible implementation, the quantity of rows of the first weight matrix is 2, the quantity of columns of the first weight matrix is 8, and the first weight matrix is:

$$\begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix}.$$

According to a second aspect, this application provides a communication method. An example in which a terminal device performs the method is used. The method includes: The terminal device receives a channel state information reference signal CSIRS from a network device, where the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels. Further, the terminal device measures the CSIRS to obtain channel state information CSI, and sends the CSI to the network device.

For beneficial effects of the method described in the second aspect, refer to the beneficial effects of the method described in the first aspect.

In a possible implementation, that the quantities of rows and columns of the first weight matrix are related to the quantity of transmit ports of the CSIRS and the quantity of digital channels of the network device includes: The quantity of rows of the first weight matrix is equal to the quantity of digital channels of the network device, and the quantity of columns of the first weight matrix is equal to the quantity of transmit ports of the CSIRS; or the quantity of columns of the first weight matrix is equal to the quantity of digital channels of the network device, and the quantity of rows of the first weight matrix is equal to the quantity of transmit ports of the CSIRS.

In a possible implementation, the first weight matrix includes a plurality of element values, and the element values included in the first weight matrix are related to one or more of the following information: a codebook type corresponding to the terminal device, the quantity of digital channels of the network device, the quantity of transmit ports of the CSIRS, communication environment information of the terminal device, a phase precision requirement for a second weight matrix, and/or an amplitude quantization requirement for the second weight matrix.

In a possible implementation, the quantity of transmit ports of the CSIRS is 8, and the quantity of digital channels is 4.

In a possible implementation, the quantity of rows of the first weight matrix is 4, the quantity of columns of the first weight matrix is 8, and the first weight matrix is any one of the following:

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix}; \quad \text{or} \quad \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix}; \quad \text{or} \quad \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or $[Q_1 \ Q_2]$, where $Q_1$ is a unitary matrix with four rows and four columns, and $Q_2$ is a unitary matrix with four rows and four columns.

In a possible implementation, the quantity of transmit ports of the CSIRS is 8, and the quantity of digital channels is 2.

In a possible implementation, the quantity of rows of the first weight matrix is 2, the quantity of columns of the first weight matrix is 8, and the first weight matrix is:

$$\begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} & \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix}.$$

According to a third aspect, this application provides a communication apparatus. The communication apparatus may be a network device, an apparatus in a network device, or an apparatus that can be used in combination with a network device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing functions. The units or modules may be software and/or hardware. For operations performed by the communication apparatus and beneficial effects thereof, refer to the method and the beneficial effects in the first aspect thereof.

According to a fourth aspect, this application provides a communication apparatus. The communication apparatus may be a terminal device, an apparatus in a terminal device, or an apparatus that can be used in combination with a terminal device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing functions. The units or modules may be software and/or hardware. For operations performed by the communication apparatus and beneficial effects thereof, refer to the method and the beneficial effect in the second aspect thereof.

According to a fifth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus; and the processor is configured to implement the method according to the first aspect through a logic circuit or by executing code instructions, or the processor is configured to implement the method according to the second aspect through a logic circuit or by executing code instructions.

According to a sixth aspect, this application provides a computer-readable storage medium. The storage medium stores a computer program or instructions. When the computer program or the instructions are executed by a communication apparatus, the method according to the first aspect is implemented, or the method according to the second aspect is implemented.

According to a seventh aspect, this application provides a computer program product including instructions. When a communication apparatus reads and executes the instructions, the communication apparatus is caused to perform the method according to the first aspect, or the communication apparatus is caused to perform the method according to the second aspect.

According to an eighth aspect, this application provides a communication system, including a communication apparatus configured to perform the method according to the first aspect and a communication apparatus configured to perform the method according to the second aspect.

**BRIEF DESCRIPTION OF DRAWINGS**

FIG. 1 is a diagram of a communication system according to an embodiment of this application;
FIG. 2 is a schematic flowchart of a communication method according to an embodiment of this application;
FIG. 3 is a diagram of a structure of a communication apparatus according to an embodiment of this application; and
FIG. 4 is a diagram of a structure of another communication apparatus according to an embodiment of this application.

**DESCRIPTION OF EMBODIMENTS**

For ease of specific understanding of embodiments of this application, the following first describes a system architecture in embodiments of this application.

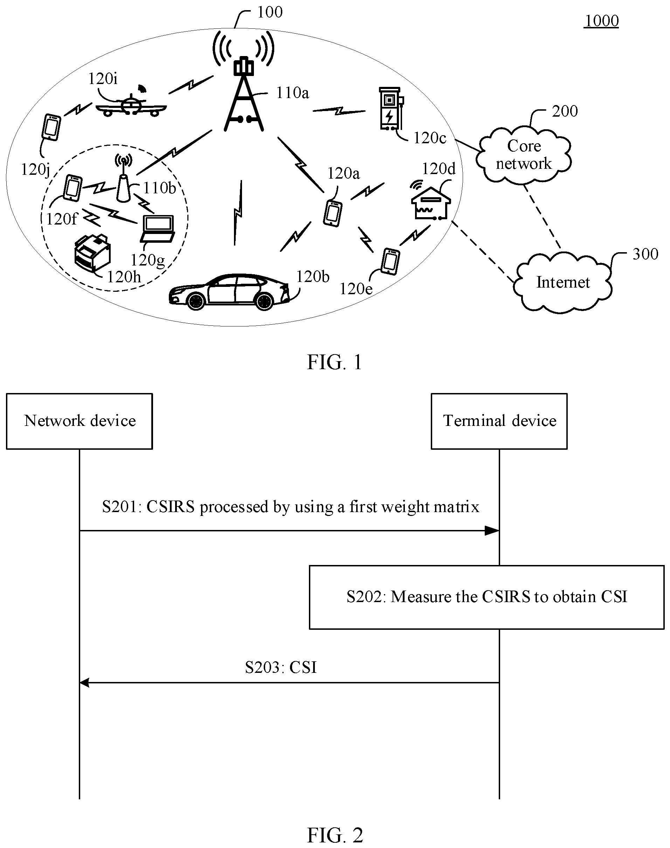

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner. It should be noted that the RAN node 110 may also be referred to as a network device 110 in the following.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access the communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes, including a CU-control plane node and a CU-user plane node.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, automatic driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that in embodiments of this application, a PDSCH, a PDCCH, and a PUSCH are only used as examples of a downlink data channel, a downlink control channel, and an uplink data channel, respectively. In different systems and different scenarios, a data channel and a control channel may have different names. This is not limited in embodiments of this application.

For ease of understanding of related content of embodiments of this application, the following further explains and describes some terms in embodiments of this application. This part is merely for ease of understanding, and cannot be considered as a disclosure or a specific limitation on the technical solutions of this application.

1. Channel

A channel between a baseband module in a network device (or a terminal device) and a specific antenna port in the terminal device (or the network device) is referred to as a channel for short, or may be referred to as a radio frequency link, a digital channel, or the like.

Channels are classified into an uplink transmitting channel (which may also be referred to as an uplink transmission channel or an uplink channel) and a downlink receiving channel (which may also be referred to as a downlink channel). When the terminal device performs uplink sending, one uplink transmitting channel may be used for connecting the baseband module in the terminal device and one antenna port of the terminal device, to transmit a baseband signal to an antenna for sending. One uplink transmitting channel may include at least one of a digital-to-analog converter, a filter, a frequency mixer, and a power amplifier. When the terminal device performs downlink receiving, one downlink receiving channel may be used for connecting the baseband module in the terminal device and one antenna port of the terminal device, to transmit a signal received on an antenna to a baseband. One downlink receiving channel may include at least one of an analog-to-digital converter, a filter, a frequency mixer, and a power amplifier. Generally, uplink and downlink channels cannot be shared. The terminal device may have one or more uplink transmitting channels and one or more downlink transmitting channels.

It should be noted that a quantity of digital channels of the network device mentioned in this application may be understood as a quantity of digital channels on which the network device actually sends a CSIRS. The quantity of digital channels on which the network device actually sends the CSIRS may be less than or equal to a quantity of digital channels that the network device has. The quantity of digital channels that the network device has is determined by hardware of the network device. For example, it is determined, based on the hardware of the network device, that a maximum quantity of digital channels of the network device is 64 (that is, the quantity of digital channels that the network device has as mentioned in this application), but a current quantity of digital channels used by the network device to send the CSIRS is 8 (that is, the quantity of digital channels on which the network device actually sends the CSIRS as mentioned in this application). In this case, a first weight matrix corresponds to eight digital channels of the network device.

2. Port

An antenna port may be referred to as a port for short, and may be understood as a transmit antenna identified by a receiving device, or a transmit antenna that may be distinguished spatially. One antenna port may be configured for each virtual antenna, and each virtual antenna may be a weighted combination of a plurality of physical antennas. Each antenna port may correspond to one reference signal. Therefore, each antenna port may be referred to as a port of a reference signal. For example, a port of a channel state information reference signal (channel state information reference signal, CSIRS) may also be referred to as a transmit port of the CSIRS, a port of a sounding reference signal (sounding reference signal, SRS), or the like. It should be noted that the port of the reference signal is also referred to as a transmit port of the reference signal in this application. For example, the port of the CSIRS may also be referred to as the transmit port of the CSIRS in this application.

3. Precoding technology

When channel state information (channel state information, CSI) is known, the network device may process a to-be-sent signal by using a precoding matrix that matches a channel state, so that a precoded to-be-sent signal adapts to a channel, to reduce complexity of eliminating interchannel impact by the receiving device. Therefore, quality (for example, a signal to interference plus noise ratio (signal to interference plus noise ratio, SINR)) of a received signal is improved by precoding the to-be-sent signal.

It should be understood that related descriptions of the precoding technology in this specification are merely examples for ease of understanding, and are not intended to limit the protection scope of embodiments of this application. In a specific implementation process, a sending device may alternatively perform precoding in another manner. For example, when channel information (for example, but not limited to, a channel matrix) cannot be obtained, precoding is performed by using a preset precoding matrix or in a weighted processing manner. For brevity, specific content thereof is not described in this specification.

4. CSIRS

The CSIRS is used for obtaining the CSI. Specifically, the network device weights the CSIRS by using a weight matrix, and sends a weighted CSIRS to the terminal device through an air interface channel. In this case, the CSIRS received by the terminal device satisfies a condition shown in Formula (1):

$$y_{CSIRS} = H_{air\ interface\ channel} W_{CSIRS} s_{CSIRS} + n_{CSIRS} \qquad (1)$$

$y_{CSIRS}$ is the CSIRS received by the terminal device, $H_{air\ interface\ channel}$ is the air interface channel, $W_{CSIRS}$ is the weight matrix for weighting the CSIRS, $s_{CSIRS}$ is the CSIRS that is not weighed by using the weight matrix, $n_{CSIRS}$ is noise of the air interface channel, and $H_{air\ interface\ channel} W_{CSIRS}$ is an equivalent channel.

Further, the terminal device measures the equivalent channel based on the received CSIRS, to obtain the CSI, where the CSI includes a channel quality indicator (channel quality indicator, CQI), a rank indicator (rank indicator, RI), and a precoding indicator (precoding matrix indicator, PMI).

Researchers find that a quantity of transmit ports of the CSIRS is related to feedback accuracy of the CSI fed back by the terminal device. As the quantity of transmit ports of the CSIRS increases, the feedback accuracy of the CSI increases. However, the quantity of transmit ports of the CSIRS is usually limited by a quantity of digital channels of the network device, that is, the quantity of transmit ports of the CSIRS is less than or equal to the quantity of digital channels of the network device, resulting in limited feedback accuracy of the CSI.

To improve the feedback accuracy of the CSI, this application provides a communication method and a communication apparatus. The following describes in detail, with reference to the accompanying drawings, the communication method and the communication apparatus provided in embodiments of this application. FIG. 2 is a schematic flowchart of a communication method according to an embodiment of this application. As shown in FIG. 2, the communication method includes the following step S201 to step S203. The method shown in FIG. 2 is described by using a terminal device and a network device as examples of execution entities. It may be understood that the execution entities of the method shown in FIG. 2 may alternatively be a module (for example, a chip) in the terminal device and a module (for example, a chip, a CU, or a DU) in the network device.

S201: The network device sends a CSIRS to the terminal device, where the CSIRS is processed by using a first weight matrix.

In other words, after weighting the CSIRS by using the first weight matrix, the network device sends the weighted CSIRS to the terminal device. Quantities of rows and columns of the first weight matrix are related to a quantity of transmit ports of the CSIRS and a quantity of digital channels of the network device, and the quantity of transmit ports of the CSIRS is greater than the quantity of digital channels.

It should be noted that, in this application, a quantity of rows and a quantity of columns of a matrix are collectively referred to as quantities of rows and columns. The first weight matrix mentioned in this application may be understood as $W_{CSIRS}$ in the foregoing Formula (1). That the quantities of rows and columns of the first weight matrix are related to the quantity of transmit ports of the CSIRS and the quantity of digital channels of the network device may be understood as that the quantity of rows of the first weight matrix is related to the quantity of transmit ports of the CSIRS or the quantity of digital channels of the network device, and the quantity of columns of the first weight matrix is related to the quantity of transmit ports of the CSIRS or the quantity of digital channels of the network device.

In an optional implementation, when the quantity of rows of the first weight matrix is equal to the quantity of digital channels of the network device, the quantity of columns of the first weight matrix is equal to the quantity of transmit ports of the CSIRS. Alternatively, when the quantity of columns of the first weight matrix is equal to the quantity of digital channels of the network device, the quantity of rows of the first weight matrix is equal to the quantity of transmit ports of the CSIRS.

It should be noted that element values included in the first weight matrix are not specifically limited in this application. In a possible implementation, the element values included in the first weight matrix may be related to one or more of the following information (or this is understood as that the element values are determined based on one or more of the following information): (1) a codebook type corresponding to the terminal device, where for example, the codebook type may be R15-Type I codebook, R15/R16-Type II codebook, or R17/R18 protocol codebook; (2) the quantity of digital channels of the network device; (3) the quantity of transmit ports of the CSIRS; (4) communication environment information of the terminal device, where the communication environment information includes one or more of communication bandwidth information, a transmission delay, reference signal received power (reference signal received power, RSRP), reference signal received quality (reference signal received quality, RSRQ), a signal to interference plus noise ratio (signal to interference plus noise ratio, SINR), a bit error rate, or a throughput; (5) a phase precision requirement for a second weight matrix, where the second weight matrix may be understood as a matrix that is obtained based on the first weight matrix and that is used for subsequently processing a signal to be sent to the terminal device; and (6) an amplitude quantization requirement for the second weight matrix. For a specific description of the second weight matrix, refer to an example description of the second weight matrix in subsequent S203.

The following further provides examples of the first weight matrix in two cases to help with understanding. The examples are merely used to help understand the first weight matrix, and should not be considered as specific limitations on the solution of this application.

Case 1: The quantity of transmit ports of the CSIRS is 8, and the quantity of digital channels of the network device is 4.

In Case 1, the first weight matrix is a matrix with four rows and eight columns, or a matrix with eight rows and four columns. For example, the first weight matrix is a matrix with four rows and eight columns (that is, the quantity of rows of the first weight matrix is 4, and the quantity of columns of the first weight matrix is 8). The first weight matrix may be any one of the following:

$$
\begin{bmatrix}
1 & 0 & 0 & 0 & 0 & 0 & 0 & 0 \\
0 & 1 & 0 & 0 & 0 & 0 & 0 & 0 \\
0 & 0 & 1 & 0 & 0 & 0 & 0 & 0 \\
0 & 0 & 0 & 1 & 0 & 0 & 0 & 0
\end{bmatrix} ; \quad \text{or} \quad
\begin{bmatrix}
1 & 0 & 0 & 0 & 0 & 0 & 0 & 0 \\
0 & 1 & 0 & 0 & 0 & 0 & 0 & 0 \\
0 & 0 & 0 & 0 & 0 & 0 & 1 & 0 \\
0 & 0 & 0 & 0 & 0 & 0 & 0 & 1
\end{bmatrix} ;
$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix}; \text{ or } \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or $[Q_1\ Q_2]$, where $Q_1$ is a unitary matrix with four rows and four columns, and $Q_2$ is a unitary matrix with four rows and four columns.

Case 2: The quantity of transmit ports of the CSIRS is 8, and the quantity of digital channels is 2.

In Case 2, the first weight matrix is a matrix with two rows and eight columns, or a matrix with eight rows and two columns. For example, the first weight matrix is a matrix with two rows and eight columns (that is, the quantity of rows of the first weight matrix is 2, and the quantity of columns of the first weight matrix is 8). The first weight matrix may be:

$$\begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} & \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix}.$$

S202: The terminal device measures the CSIRS to obtain CSI.

In other words, after receiving the CSIRS, the terminal device performs channel estimation on an equivalent channel (for example, corresponding to a formula $H_{air\,interface\,channel}W_{CSIRS}$) for transmitting the CSIRS, to obtain the CSI. Generally, the CSI may include one or more of the following information: a channel quality indicator (channel quality indicator, CQI), a precoding indicator (precoding matrix indicator, PMI), a CSIRS resource indicator (CSIRS resource indicator, CRI), a synchronization signal/broadcast channel resource block indicator (synchronization signal/physical broadcast channel block resource indicator, SSBRI), a layer indicator (layer indicator, LI), a rank indicator (rank indicator, RI), layer 1 reference signal received power (layer 1 reference signal received power, L1-RSRP), a layer 1 signal to interference plus noise ratio (layer 1 signal to interference plus noise ratio, L1-SINR), and a capability index (Capability Index).

The RI indicates a quantity of transmission layers that is recommended by the terminal device for the network device to perform data transmission, the PMI indicates a precoding matrix recommended for the quantity of transmission layers, and the CQI indicates a modulation and coding scheme recommended for the quantity of transmission layers and the precoding matrix, where the modulation and coding scheme is expected to achieve a preset block error rate. The LI is used to inform the network device of a column in the precoding matrix corresponding to the PMI, and the column corresponds to a strongest stream of a codeword with a large wideband CQI. The CRI and the SSBRI are used by the terminal device, when the network device configures a plurality of CSIRS resources or synchronization signal blocks (synchronization signal blocks, SSBs) for CSI measurement, to inform the network device of a resource on which a current measurement result is based. The capability index indicates a maximum quantity of SRS ports.

S203: The terminal device sends the CSI to the network device.

In other words, after obtaining the CSI, the terminal device sends the CSI to the network device by using a resource corresponding to the CSI (for example, on a transmission occasion of the CSI). Further, the network device may perform related processing based on the CSI, for example, perform resource scheduling or signal processing.

In a possible implementation, after receiving the CSI from the terminal device, the network device obtains the second weight matrix based on the first weight matrix and the precoding matrix indicated by the PMI included in the CSI, where the second weight matrix is used for processing a signal to be sent to the terminal device. A manner of obtaining the second weight matrix based on the first weight matrix and the precoding matrix indicated by the PMI included in the CSI includes, but is not limited to, using, as the second weight matrix, a product of the first weight matrix and the precoding matrix indicated by the PMI. For example, in a process of obtaining the second weight matrix, based on a sending requirement (for example, a weight orthogonality requirement or a hardware power requirement) of the signal to be sent to the terminal device (for ease of description, referred to as a to-be-sent signal for short below), orthogonalization processing, power normalization processing, and the like that adapt to the to-be-sent signal may be further performed on the product of the first weight matrix and the precoding matrix indicated by the PMI. It may also be understood as that screening, adjustment, normalization processing, or the like is performed on the product of the first weight matrix and the precoding matrix indicated by the PMI.

It should be noted that the signal to be sent to the terminal device (or understood as a signal processed by using the second weight matrix) may be a signal corresponding to a physical downlink shared channel (physical downlink shared channel, PDSCH), or may be a signal corresponding to a physical downlink control channel (physical downlink control channel, PDCCH).

For ease of understanding of the technical solutions of this application, the following uses a case in which the quantity of transmit ports of the CSIRS is equal to the quantity of digital channels as a comparison example to describe the second weight matrix obtained in this application.

Example 1: The precoding matrix indicated by the PMI is a precoding matrix corresponding to the R15-Type I codebook; the quantity of digital channels of the network device is 4; in the comparison example, the quantity of transmit ports of the CSIRS is 4; and in the solution provided in this application, the quantity of transmit ports of the CSIRS is 8.

In this case, the comparison example is denoted as Case 0, and the solution provided in this application is denoted as Case 1, Case 2, or Case 3. For weight matrices $W_{CSIRS}$ respectively corresponding to Case 0 to Case 3, refer to Formula (2). The weight matrix $W_{CSIRS}$ corresponding to Case 1, Case 2, or Case 3 may be understood as the first weight matrix.

$$W_{CSIRS} = \begin{cases} \text{Case 0} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \\ \text{Case 1} & \begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix} \\ \text{Case 2} & \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix} \\ \text{Case 3} & \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix} \end{cases} \tag{2}$$

If a precoding matrix corresponding to the comparison example (that is, Case 0) is

$W_{PMI} = \begin{bmatrix} 1 \\ e^{j\theta} \\ e^{j\varphi}\left(\begin{smallmatrix}1\\e^{j\theta}\end{smallmatrix}\right) \end{bmatrix}, \begin{cases} \theta \in \{0, \frac{\pi}{4}, ..., \frac{7\pi}{4}\} \\ \varphi \in \{0, \frac{\pi}{2}, \pi, \frac{3\pi}{2}\} \end{cases}$ , precoding matrices corresponding to the solutions (that is, Case 1 to Case 3) provided in this application are $W_{PMI} = \begin{bmatrix} 1 \\ e^{j\theta} \\ e^{j\phi}\left(\begin{smallmatrix}1\\e^{j\theta}\end{smallmatrix}\right) \\ e^{j\varphi}\left(\begin{smallmatrix}1\\e^{j\theta}\\e^{j\phi}\left(\begin{smallmatrix}1\\e^{j\theta}\end{smallmatrix}\right)\end{smallmatrix}\right) \end{bmatrix}, \begin{cases} \theta \in \{0, \frac{\pi}{4}, ..., \frac{7\pi}{4}\} \\ \phi \in \{0, \frac{\pi}{4}, ..., \frac{7\pi}{4}\} \\ \varphi \in \{0, \frac{\pi}{2}, \pi, \frac{3\pi}{2}\} \end{cases}$ . In this case,

the network device obtains $W_{CSIRS}W_{PMI}$ shown in Formula (3) based on the precoding matrices $W_{PMI}$ and the weight matrices $W_{CSIRS}$ that correspond to Case 0 to Case 3, where $W_{CSIRS}W_{PMI}$ corresponding to Case 1 to Case 3 may be understood as the second weight matrix.

$$W_{CSIRS}W_{PMI} = \begin{cases} \text{Case 0} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} 1 \\ e^{j\theta} \\ e^{j\varphi}\begin{pmatrix} 1 \\ e^{j\theta} \end{pmatrix} \end{bmatrix} = \begin{bmatrix} 1 \\ e^{j\theta} \\ e^{j\varphi}\begin{pmatrix} 1 \\ e^{j\theta} \end{pmatrix} \end{bmatrix} \\[2em] \text{Case 1} & \begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix} \begin{bmatrix} 1 \\ e^{j\theta} \\ e^{j\phi}\begin{pmatrix} 1 \\ e^{j\theta} \end{pmatrix} \\ e^{j\varphi}\begin{pmatrix} 1 \\ e^{j\theta} \\ e^{j\phi}\begin{pmatrix} 1 \\ e^{j\theta} \end{pmatrix} \end{pmatrix} \end{bmatrix} = \begin{bmatrix} 1 \\ e^{j\theta} \\ e^{j\phi}\begin{pmatrix} 1 \\ e^{j\theta} \end{pmatrix} \end{bmatrix} \\[2em] \text{Case 2} & \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix} \begin{bmatrix} 1 \\ e^{j\theta} \\ e^{j\phi}\begin{pmatrix} 1 \\ e^{j\theta} \end{pmatrix} \\ e^{j\varphi}\begin{pmatrix} 1 \\ e^{j\theta} \\ e^{j\phi}\begin{pmatrix} 1 \\ e^{j\theta} \end{pmatrix} \end{pmatrix} \end{bmatrix} = \begin{bmatrix} 1 \\ e^{j\theta} \\ e^{j\varphi}e^{j\phi}\begin{pmatrix} 1 \\ e^{j\theta} \end{pmatrix} \end{bmatrix} \\[2em] \text{Case 3} & \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix} \begin{bmatrix} 1 \\ e^{j\theta} \\ e^{j\phi}\begin{pmatrix} 1 \\ e^{j\theta} \end{pmatrix} \\ e^{j\varphi}\begin{pmatrix} 1 \\ e^{j\theta} \\ e^{j\phi}\begin{pmatrix} 1 \\ e^{j\theta} \end{pmatrix} \end{pmatrix} \end{bmatrix} = \begin{bmatrix} 1 \\ e^{j\theta} \\ e^{j\varphi}\begin{pmatrix} 1 \\ e^{j\phi} \end{pmatrix} \end{bmatrix} \end{cases}$$

$$(3)$$

In the following, Case 0 in Example 1 is separately compared with Case 1 to Case 3.

In comparison between Case 0 and Case 1, a polarization phase of $W_{CSIRS}W_{PMI}$ corresponding to Case 1 is $e^{j\phi}$, where a value of $\phi$ is determined at a granularity of $\dfrac{\pi}{4}$; and a polarization phase of $W_{CSIRS}W_{PMI}$ corresponding to Case 0 is $e^{j\varphi}$, where a value of $\varphi$ is determined at a granularity of $\dfrac{\pi}{2}$. Therefore, quantization precision of the polarization phase of $W_{CSIRS}W_{PMI}$ corresponding to Case 1 is higher than quantization precision of the polarization phase of $W_{CSIRS}W_{PMI}$ corresponding to Case 0.

In comparison between Case 0 and Case 2, a polarization phase of $W_{CSIRS}W_{PMI}$ corresponding to Case 2 is $e^{j\varphi}e^{j\phi}$, $\phi$ $\dfrac{\pi}{4}$, and a value of $\varphi$ is determined at a granularity of $\dfrac{\pi}{2}$; and the polarization phase of $W_{CSIRS}W_{PMI}$ corresponding to Case 0 is $e^{j\varphi}$, where the value of $\varphi$ is determined at the granularity of $\dfrac{\pi}{2}$. It can be learned that quantization precision of the polarization phase of $W_{CSIRS}W_{PMI}$ corresponding to Case 2 is higher than the quantization precision of the polarization phase of $W_{CSIRS}W_{PMI}$ corresponding to Case 0.

In comparison between Case 0 and Case 3, in Case 0, beam phases of $\pm45°$ polarization are both $\begin{bmatrix} 1 \\ e^{j\theta} \end{bmatrix}$, where a value of $\theta$ is determined at a granularity of $\dfrac{\pi}{4}$, and $\begin{bmatrix} 1 \\ e^{j\theta} \end{bmatrix}$ in Case 0 have eight quantization levels. In Case 3, beam phases of $\pm45°$ polarization are respectively $\begin{bmatrix} 1 \\ e^{j\theta} \end{bmatrix}$ and $\begin{bmatrix} 1 \\ e^{j\phi} \end{bmatrix}$, where values of $\phi$ and $\phi$ are determined at a granularity

of $\frac{\pi}{4}$, and $\left\{\begin{bmatrix} 1 \\ e^{j\theta} \end{bmatrix}, \begin{bmatrix} 1 \\ e^{j\phi} \end{bmatrix}\right\}$ in Case 3 have 64 quantization levels. It can be learned that quantization precision of beam phases corresponding to Case 3 is higher than quantization precision of the beam phase of $e^{j\varphi}$, corresponding to Case 0.

Example 2: The precoding matrix indicated by the PMI is a precoding matrix corresponding to the R15-Type I codebook; the quantity of digital channels of the network device is 2; in the comparison example, the quantity of transmit ports of the CSIRS is 2; and in the solution provided in this application, the quantity of transmit ports of the CSIRS is 8.

In this case, the comparison example is denoted as Case 0, and the solution provided in this application is denoted as Case 1. For weight matrices $W_{CSIRS}$ respectively corresponding to Case 0 and Case 1, refer to Formula (4). The weight matrix $W_{CSIRS}$ corresponding to Case 1 may be understood as the first weight matrix.

$$W_{CSIRS} = \begin{cases} \text{Case 0} & \begin{bmatrix} 1 & 0 \\ 0 & 1 \end{bmatrix} \\ \text{Case 1} & \begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} & \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix} \end{cases} \quad (4)$$

If a precoding matrix corresponding to the comparison example (that is, Case 0) is

$W_{PMI} = \begin{bmatrix} 1 \\ e^{j\varphi} \end{bmatrix}, \left\{ \varphi \in \left\{ 0, \frac{\pi}{2}, \pi, \frac{3\pi}{2} \right\} \right.$, and a precoding matrix corresponding to the solution (that is, Case 1) provided in this application is $W_{PMI} = \begin{bmatrix} 1 \\ e^{j\theta} \\ e^{j\phi}\left(\dfrac{1}{e^{j\theta}}\right) \\ e^{j\varphi}\left(\dfrac{1}{e^{j\theta}}\right) \\ e^{j\varphi}\left(\dfrac{e^{j\theta}}{e^{j\phi}\left(\frac{1}{e^{j\theta}}\right)}\right) \end{bmatrix}, \begin{cases} \theta \in \left\{ 0, \frac{\pi}{4}, \dots, \frac{7\pi}{4} \right\} \\ \phi \in \left\{ 0, \frac{\pi}{4}, \dots, \frac{7\pi}{4} \right\} \\ \varphi \in \left\{ 0, \frac{\pi}{2}, \pi, \frac{3\pi}{2} \right\} \end{cases}$ , the network device obtains

$W_{CSIRS}W_{PMI}$ shown in Formula (5) based on the precoding matrices $W_{PMI}$ and the weight matrices $W_{CSIRS}$ that correspond to Case 0 and Case 1, where $W_{CSIRS}W_{PMI}$ corresponding to Case 1 may be understood as the second weight matrix.

$$W_{CSIRS}W_{PMI} = \begin{cases} \text{Case 0} & \begin{bmatrix} 1 & 0 \\ 0 & 1 \end{bmatrix}\begin{bmatrix} 1 \\ e^{j\varphi} \end{bmatrix} = \begin{bmatrix} 1 \\ e^{j\varphi} \end{bmatrix} \\ \text{Case 1} & W_{CSIRS-Case1}\begin{bmatrix} 1 \\ e^{j\theta} \\ e^{j\phi}\left(\dfrac{1}{e^{j\theta}}\right) \\ e^{j\varphi}\left(\dfrac{e^{j\theta}}{e^{j\phi}\left(\frac{1}{e^{j\theta}}\right)}\right) \end{bmatrix} = \begin{bmatrix} 1 \\ \tan\left(\frac{\phi+\Delta_2}{2}\right)\tan\left(\frac{\theta+\Delta_1}{2}\right)e^{j(\varphi-\pi)} \end{bmatrix} \end{cases}$$

$$(5)$$

In the following, Case 0 in Example 2 is compared with Case 1. Quantization precision of a polarization phase of $W_{CSIRS}W_{PMI}$ corresponding to Case 1 is the same as quantization precision of a polarization phase of $W_{CSIRS}W_{PMI}$ corresponding to Case 0. An amplitude of $W_{CSIRS}W_{PMI}$ corresponding to Case 1 is $\tan\left(\frac{\phi+\Delta_2}{2}\right)\tan\left(\frac{\theta+\Delta_1}{2}\right)$ , and an amplitude of $W_{CSIRS}W_{PMI}$ corresponding to Case 0 is 1. Because $\phi$ and $\theta$ each correspond to eight values, the amplitude of $W_{CSIRS}W_{PMI}$ corresponding to Case 1 corresponds to 64 values. This may be understood as that there are 64 amplitude adjustment capabilities. Further, when power of antennas of the network device is unbalanced, the to-be-sent signal is processed by using $W_{CSIRS}W_{PMI}$ corresponding to Case 1, to help improve performance of the to-be-sent signal.

Example 3: The precoding matrix indicated by the PMI is a precoding matrix corresponding to the R15/R16-Type II codebook; the quantity of digital channels of the network device is 4; in the comparison example, the quantity of transmit ports of the CSIRS is 4; and in the solution provided in this application, the quantity of transmit ports of the CSIRS is 8.

In this case, the comparison example is denoted as Case 0, and the solutions provided in this application are denoted as Case 1 and Case 2. For weight matrices $W_{CSIRS}$ respectively corresponding to Case 0 to Case 2, refer to Formula (6). The weight matrices $W_{CSIRS}$ corresponding to Case 1 and Case 2 may be understood as the first weight matrix.

$$W_{CSIRS} = \begin{cases} \text{Case 0} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \\ \text{Case 1} & \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix} \\ \text{Case 2} & \begin{bmatrix} Q_1 \in \mathbb{C}^{4\times4} & Q_2 \in \mathbb{C}^{4\times4} \end{bmatrix} \end{cases} \qquad (6)$$

$Q_1$ and $Q_2$ are arbitrary unitary matrices.

If a precoding matrix corresponding to the comparison example (that is, Case 0) is

$$W_{PMI} = \frac{1}{\sqrt{P}} \begin{bmatrix} 1 \\ c_1 e^{j\theta_1} \\ c_2 e^{j\theta_2} \\ c_3 e^{j\theta_3} \end{bmatrix}, \begin{cases} \theta_1, \theta_2, \theta_3 \in \left\{0, \frac{\pi}{4}, \dots, \frac{7\pi}{4}\right\} \\ c_1, c_2, c_3 \in \left\{1, \frac{1}{\sqrt{2}}, \dots, \frac{1}{\sqrt{128}}\right\} \\ where \ \frac{1}{\sqrt{P}} \ is \ a \ vector \ power \ normalization \ factor \end{cases} \text{, and precoding matrices}$$

corresponding to Case 1 and Case 2 are

$$W_{PMI} = \frac{1}{\sqrt{P}} \begin{bmatrix} 1 \\ c_1 e^{j\theta_1} \\ c_2 e^{j\theta_2} \\ c_3 e^{j\theta_3} \\ c_4 e^{j\theta_4} \\ c_5 e^{j\theta_5} \\ c_6 e^{j\theta_6} \\ c_7 e^{j\theta_7} \end{bmatrix}, \begin{cases} \theta_1, \theta_2, \dots, \theta_7 \in \left\{0, \frac{\pi}{4}, \dots, \frac{7\pi}{4}\right\} \\ c_1, c_2, \dots, c_7 \in \left\{1, \frac{1}{\sqrt{2}}, \dots, \frac{1}{\sqrt{128}}\right\} \\ where \ \frac{1}{\sqrt{P}} \ is \ a \ vector \ power \ normalization \ factor \end{cases} \text{, the network device ob-}$$

tains $W_{CSIRS}W_{PMI}$ shown in Formula (7) based on the precoding matrices $W_{PMI}$ and the weight matrices $W_{CSIRS}$ that correspond to Case 0 to Case 2, where $W_{CSIRS}W_{PMI}$ corresponding to Case 1 or Case 2 may be understood as the second weight matrix.

$$W_{CSIRS}W_{PMI} = \begin{cases} \text{Case 0} \quad \begin{bmatrix} 1 & 0 & 0 & 0 \\ 0 & 1 & 0 & 0 \\ 0 & 0 & 1 & 0 \\ 0 & 0 & 0 & 1 \end{bmatrix} \frac{1}{\sqrt{P}} \begin{bmatrix} 1 \\ c_1 e^{j\theta_1} \\ c_2 e^{j\theta_2} \\ c_3 e^{j\theta_3} \end{bmatrix} = \frac{1}{\sqrt{P}} \begin{bmatrix} 1 \\ c_1 e^{j\theta_1} \\ c_2 e^{j\theta_2} \\ c_3 e^{j\theta_3} \end{bmatrix} \\[3em] \text{Case 1} \quad \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix} \frac{1}{\sqrt{P}} \begin{bmatrix} 1 \\ c_1 e^{j\theta_1} \\ c_2 e^{j\theta_2} \\ c_3 e^{j\theta_3} \\ c_4 e^{j\theta_4} \\ c_5 e^{j\theta_5} \\ c_6 e^{j\theta_6} \\ c_7 e^{j\theta_7} \end{bmatrix} = \frac{1}{\sqrt{P}} \begin{bmatrix} 1 \\ c_1 e^{j\theta_1} \\ c_2 e^{j\theta_2} \\ c_3 e^{j\theta_3} \end{bmatrix} + \frac{1}{\sqrt{P}} \begin{bmatrix} c_4 e^{j\theta_4} \\ c_5 e^{j\theta_5} \\ c_6 e^{j\theta_6} \\ c_7 e^{j\theta_7} \end{bmatrix} \\[3em] \text{Case 2} \quad \begin{bmatrix} Q_1 \in \mathbb{C}^{4\times 4} & Q_2 \in \mathbb{C}^{4\times 4} \end{bmatrix} \frac{1}{\sqrt{P}} \begin{bmatrix} 1 \\ c_1 e^{j\theta_1} \\ c_2 e^{j\theta_2} \\ c_3 e^{j\theta_3} \\ c_4 e^{j\theta_4} \\ c_5 e^{j\theta_5} \\ c_6 e^{j\theta_6} \\ c_7 e^{j\theta_7} \end{bmatrix} = \frac{1}{\sqrt{P}} Q_1 \begin{bmatrix} 1 \\ c_1 e^{j\theta_1} \\ c_2 e^{j\theta_2} \\ c_3 e^{j\theta_3} \end{bmatrix} + \frac{1}{\sqrt{P}} Q_2 \begin{bmatrix} c_4 e^{j\theta_4} \\ c_5 e^{j\theta_5} \\ c_6 e^{j\theta_6} \\ c_7 e^{j\theta_7} \end{bmatrix} \end{cases}$$

$$(7)$$

In the following, Case 0 in Example 3 is separately compared with Case 1 and Case 2.

In comparison between Case 0 and Case 1, a weight of $W_{CSIRS}W_{PMI}$ corresponding to Case 0 includes one sample, that is, $\frac{1}{\sqrt{P}} \begin{bmatrix} 1 \\ c_1 e^{j\theta_1} \\ c_2 e^{j\theta_2} \\ c_3 e^{j\theta_3} \end{bmatrix}$; and a weight of $W_{CSIRS}W_{PMI}$ corresponding to Case 1 includes two samples, that is, $\frac{1}{\sqrt{P}} \begin{bmatrix} 1 \\ c_1 e^{j\theta_1} \\ c_2 e^{j\theta_2} \\ c_3 e^{j\theta_3} \end{bmatrix}$ and $\frac{1}{\sqrt{P}} \begin{bmatrix} c_4 e^{j\theta_4} \\ c_5 e^{j\theta_5} \\ c_6 e^{j\theta_6} \\ c_7 e^{j\theta_7} \end{bmatrix}$. When there is a codebook quantization error, more samples may be obtained in a single time of measurement by using $W_{CSIRS}W_{PMI}$ corresponding to Case 1, to help obtain higher weight accuracy. In addition, under a constraint of the R16-Type II protocol codebook, higher weight accuracy and more weight samples may be obtained by using $W_{CSIRS}W_{PMI}$ corresponding to Case 1, to improve comprehensive performance.

In comparison between Case 0 and Case 2, a weight of $W_{CSIRS}W_{PMI}$ corresponding to Case 0 includes one sample, that is, $\frac{1}{\sqrt{P}} \begin{bmatrix} 1 \\ c_1 e^{j\theta_1} \\ c_2 e^{j\theta_2} \\ c_3 e^{j\theta_3} \end{bmatrix}$; and a weight of $W_{CSIRS}W_{PMI}$ corresponding to Case 1 includes two samples, that is, $\frac{1}{\sqrt{P}} Q_1 \begin{bmatrix} 1 \\ c_1 e^{j\theta_1} \\ c_2 e^{j\theta_2} \\ c_3 e^{j\theta_3} \end{bmatrix}$ and $\frac{1}{\sqrt{P}} Q_2 \begin{bmatrix} c_4 e^{j\theta_4} \\ c_5 e^{j\theta_5} \\ c_6 e^{j\theta_6} \\ c_7 e^{j\theta_7} \end{bmatrix}$. When there is a codebook quantization error, more samples may be obtained in a single time of measurement by using $W_{CSIRS}W_{PMI}$ corresponding to Case 1, to help obtain higher weight accuracy. In addition, under a constraint of the R16-Type II protocol codebook, higher weight accuracy and more weight samples may be obtained by using $W_{CSIRS}W_{PMI}$ corresponding to Case 1, to improve comprehensive performance.

In conclusion, in the method shown in FIG. 2, the quantity of transmit ports of the CSIRS is not limited by the quantity of digital channels of the network device (that is, the quantity of transmit ports of the CSIRS may be greater than the quantity of digital channels). Compared with a solution in which the quantity of transmit ports of the CSIRS is limited by the quantity of digital channels of the network device (that is, the quantity of transmit ports of the CSIRS less than or equal to the quantity of digital channels), the method helps improve feedback accuracy of CSI of the terminal device.

It may be understood that, to implement the functions in the foregoing embodiments, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by a transceiver unit of computer software depends on particular application scenarios and design constraints of the technical solutions.

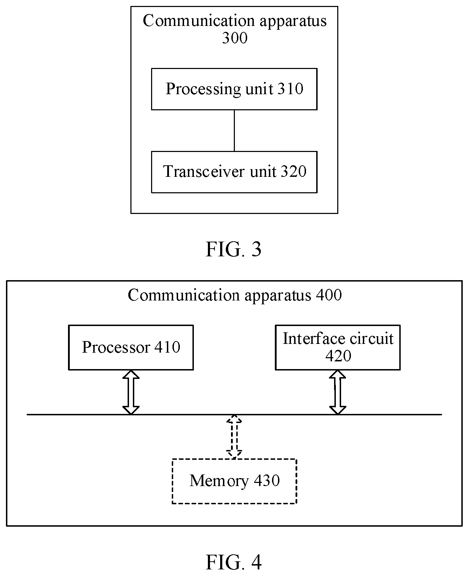

FIG. 3 and FIG. 4 are diagrams of structures of possible communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be the terminal 120 shown in FIG. 1, or may be a module (for example, a chip) used in the terminal device, or the communication apparatus may be the network device 110 shown in FIG. 1, or may be a module (for example, a chip) used in the network device.

As shown in FIG. 3, a communication apparatus 300 includes a processing unit 310 and a transceiver unit 320. The communication apparatus 300 is configured to implement functions of the network device in the foregoing method embodiment shown in FIG. 2.

When the communication apparatus 300 is configured to implement the functions of the network device in the method embodiment shown in FIG. 2, the transceiver unit 320 is configured to send a channel state information reference signal CSIRS to a terminal device, where the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels. The transceiver unit 320 is further configured to receive channel state information CSI from the terminal device.

In a possible implementation, that the quantities of rows and columns of the first weight matrix are related to the quantity of transmit ports of the CSIRS and the quantity of digital channels of the network device includes: The quantity of rows of the first weight matrix is equal to the quantity of digital channels of the network device, and the quantity of columns of the first weight matrix is equal to the quantity of transmit ports of the CSIRS; or the quantity of columns of the first weight matrix is equal to the quantity of digital channels of the network device, and the quantity of rows of the first weight matrix is equal to the quantity of transmit ports of the CSIRS.

In a possible implementation, the CSI includes a precoding matrix indicator PMI. The processing unit 310 is configured to obtain a second weight matrix based on the first weight matrix and a precoding matrix indicated by the PMI, where the second weight matrix is used for processing a signal to be sent to the terminal device.

In a possible implementation, the second weight matrix is a product of the first weight matrix and the precoding matrix indicated by the PMI.

In a possible implementation, the first weight matrix includes a plurality of element values, and the element values included in the first weight matrix are related to one or more of the following information: a codebook type corresponding to the terminal device, the quantity of digital channels of the network device, the quantity of transmit ports of the CSIRS, communication environment information of the terminal device, a phase precision requirement for the second weight matrix, and/or an amplitude quantization requirement for the second weight matrix.

In a possible implementation, the quantity of transmit ports of the CSIRS is 8, and the quantity of digital channels is 4.

In a possible implementation, the quantity of rows of the first weight matrix is 4, the quantity of columns of the first weight matrix is 8, and the first weight matrix is any one of the following:

$$
\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix} ; \quad \text{or} \quad
\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix} ;
$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix}; \text{ or } \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or $[Q_1 \, Q_2]$, where $Q_1$ is a unitary matrix with four rows and four columns, and $Q_2$ is a unitary matrix with four rows and four columns.

In a possible implementation, the quantity of transmit ports of the CSIRS is 8, and the quantity of digital channels is 2.

In a possible implementation, the quantity of rows of the first weight matrix is 2, the quantity of columns of the first weight matrix is 8, and the first weight matrix is:

$$\begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix}.$$

For more detailed descriptions of the transceiver unit 320 and the processing unit 310, refer to related descriptions of the network device in the method embodiment shown in FIG. 2.

As shown in FIG. 3, a communication apparatus 300 includes a processing unit 310 and a transceiver unit 320. The communication apparatus 300 is configured to implement functions of the terminal device in the foregoing method embodiment shown in FIG. 2.

When the communication apparatus 300 is configured to implement the functions of the terminal device in the method embodiment shown in FIG. 2, the transceiver unit 320 is configured to receive a channel state information reference signal CSIRS from a network device, where the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels; the processing unit 310 is configured to measure the CSIRS to obtain channel state information CSI; and the transceiver unit 320 is further configured to send the CSI to the network device.

In a possible implementation, that the quantities of rows and columns of the first weight matrix are related to the quantity of transmit ports of the CSIRS and the quantity of digital channels of the network device includes: The quantity of rows of the first weight matrix is equal to the quantity of digital channels of the network device, and the quantity of columns of the first weight matrix is equal to the quantity of transmit ports of the CSIRS; or the quantity of columns of the first weight matrix is equal to the quantity of digital channels of the network device, and the quantity of rows of the first weight matrix is equal to the quantity of transmit ports of the CSIRS.

In a possible implementation, the first weight matrix includes a plurality of element values, and the element values included in the first weight matrix are related to one or more of the following information: a codebook type corresponding to the terminal device, the quantity of digital channels of the network device, the quantity of transmit ports of the CSIRS, communication environment information of the terminal device, a phase precision requirement for a second weight matrix, and/or an amplitude quantization requirement for the second weight matrix.

In a possible implementation, the quantity of transmit ports of the CSIRS is 8, and the quantity of digital channels is 4.

In a possible implementation, the quantity of rows of the first weight matrix is 4, the quantity of columns of the first weight matrix is 8, and the first weight matrix is any one of the following:

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix}; \text{ or } \begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix}; \text{ or } \begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or $[Q_1 \, Q_2]$, where $Q_1$ is a unitary matrix with four rows and four columns, and $Q_2$ is a unitary matrix with four rows and four columns.

In a possible implementation, the quantity of transmit ports of the CSIRS is 8, and the quantity of digital channels is 2.

In a possible implementation, the quantity of rows of the first weight matrix is 2, the quantity of columns of the first weight matrix is 8, and the first weight matrix is:

$$\left[\begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} \quad \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix}\right].$$

For more detailed descriptions of the transceiver unit 320 and the processing unit 310, refer to related descriptions of the terminal device in the method embodiment shown in FIG. 2.

As shown in FIG. 4, a communication apparatus 400 includes a processor 410 and an interface circuit 420. The processor 410 and the interface circuit 420 are coupled to each other. It may be understood that the interface circuit 420 may be a transceiver or an input/output interface. Optionally, the communication apparatus 400 may further include a memory 430, configured to store instructions to be executed by the processor 410, store input data required by the processor 410 to run instructions, or store data generated after the processor 410 runs the instructions.

When the communication apparatus 400 is configured to implement the method shown in FIG. 4, the processor 410 is configured to implement a function of the processing unit 310, and the interface circuit 420 is configured to implement a function of the transceiver unit 320.

When the communication apparatus is a chip used in a terminal, the chip in the terminal implements functions of the terminal in the foregoing method embodiments. That the chip in the terminal receives information from a base station may be understood as that the information is first received by other modules (for example, a radio frequency module or an antenna) in the terminal, and then sent by these modules to the chip in the terminal. That the chip in the terminal sends information to a base station may be understood as that the information is first sent to other modules (for example, a radio frequency module or an antenna) in the terminal, and then sent by these modules to the base station.

When the communication apparatus is a chip used in a network device, the chip in the network device implements a function of the network device in the foregoing method embodiments. That the chip in the network device receives information from a terminal may be understood as that the information is first received by other modules (for example, a radio frequency module or an antenna) in the network device, and then sent by these modules to the chip in the network device. That the chip in the network device sends information to a terminal may be understood as that the information is delivered to other modules (for example, a radio frequency module or an antenna) in the network device, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:

   sending a channel state information reference signal CSIRS to a terminal device, wherein the CSIRS is processed by using a first weight matrix, quantities of rows and columns of the first weight matrix are related to a quantity of transmit ports of the CSIRS and a quantity of digital channels of a network device, and the quantity of transmit ports of the CSIRS is greater than the quantity of digital channels; and
   receiving channel state information CSI from the terminal device.

2. The method according to claim 1, wherein that the quantities of rows and columns of the first weight matrix are related to the quantity of transmit ports of the CSIRS and the quantity of digital channels of the network device comprises:

   the quantity of rows of the first weight matrix is equal to the quantity of digital channels of the network device, and the quantity of columns of the first weight matrix is equal to the quantity of transmit ports of the CSIRS; or
   the quantity of columns of the first weight matrix is equal to the quantity of digital channels of the network device, and the quantity of rows of the first weight matrix is equal to the quantity of transmit ports of the CSIRS.

3. The method according to claim 1 or 2, wherein the CSI comprises a precoding matrix indicator PMI, and the method further comprises:
   obtaining a second weight matrix based on the first weight matrix and a precoding matrix indicated by the PMI, wherein the second weight matrix is used for processing a signal to be sent to the terminal device.

4. The method according to claim 3, wherein the second weight matrix is a product of the first weight matrix and the precoding matrix indicated by the PMI.

5. The method according to claim 3 or 4, wherein the first weight matrix comprises a plurality of element values, and the element values comprised in the first weight matrix are related to one or more of the following information: a codebook type corresponding to the terminal device, the quantity of digital channels of the network device, the quantity of transmit ports of the CSIRS, communication environment information of the terminal device, a phase precision requirement for the second weight matrix, and/or an amplitude quantization requirement for the second weight matrix.

6. The method according to any one of claims 1 to 5, wherein the quantity of transmit ports of the CSIRS is 8, and the quantity of digital channels is 4.

7. The method according to claim 6, wherein the quantity of rows of the first weight matrix is 4, the quantity of columns of the first weight matrix is 8, and the first weight matrix is any one of the following:

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix};$$

or

$$\begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or

$[Q_1 \ Q_2]$, wherein $Q_1$ is a unitary matrix with four rows and four columns, and $Q_2$ is a unitary matrix with four rows and four columns.

8. The method according to any one of claims 1 to 5, wherein the quantity of transmit ports of the CSIRS is 8, and the quantity of digital channels is 2.

9. The method according to claim 8, wherein the quantity of rows of the first weight matrix is 2, the quantity of columns of the first weight matrix is 8, and the first weight matrix is:

$$\begin{bmatrix} \begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} & \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix} \end{bmatrix}.$$

10. A communication method, wherein the method comprises:

receiving a channel state information reference signal CSIRS from a network device, wherein the CSIRS is processed by using a first weight matrix, quantities of rows and columns of the first weight matrix are related to a quantity of transmit ports of the CSIRS and a quantity of digital channels of the network device, and the quantity of transmit ports of the CSIRS is greater than the quantity of digital channels;

measuring the CSIRS to obtain channel state information CSI; and

sending the CSI to the network device.

11. The method according to claim 10, wherein that the quantities of rows and columns of the first weight matrix are related to the quantity of transmit ports of the CSIRS and the quantity of digital channels of the network device comprises:

the quantity of rows of the first weight matrix is equal to the quantity of digital channels of the network device, and the quantity of columns of the first weight matrix is equal to the quantity of transmit ports of the CSIRS; or

the quantity of columns of the first weight matrix is equal to the quantity of digital channels of the network device, and the quantity of rows of the first weight matrix is equal to the quantity of transmit ports of the CSIRS.

12. The method according to claim 10 or 11, wherein the first weight matrix comprises a plurality of element values, and the element values comprised in the first weight matrix are related to one or more of the following information: a codebook type corresponding to the terminal device, the quantity of digital channels of the network device, the quantity of transmit ports of the CSIRS, communication environment information of the terminal device, a phase precision requirement for the second weight matrix, and/or an amplitude quantization requirement for the second weight matrix.

13. The method according to any one of claims 10 to 12, wherein the quantity of transmit ports of the CSIRS is 8, and the quantity of digital channels is 4.

14. The method according to claim 13, wherein the quantity of rows of the first weight matrix is 4, the quantity of columns of the first weight matrix is 8, and the first weight matrix is any one of the following:

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 0 & 0 & 1 & 0 \\ 0 & 0 & 0 & 0 & 0 & 0 & 0 & 1 \end{bmatrix};$$

or

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 0 & 0 & 0 & 0 & 1 & 0 \end{bmatrix};$$

or

$$\begin{bmatrix} \begin{bmatrix} 1 & 0 & 0 & 0 \\ 0 & 1 & 0 & 0 \\ 0 & 0 & 1 & 0 \\ 0 & 0 & 0 & 1 \end{bmatrix} & \begin{bmatrix} 1 & 0 & 0 & 0 \\ 0 & 1 & 0 & 0 \\ 0 & 0 & 1 & 0 \\ 0 & 0 & 0 & 1 \end{bmatrix} \end{bmatrix};$$

or

[$Q_1$ $Q_2$], wherein $Q_1$ is a unitary matrix with four rows and four columns, and $Q_2$ is a unitary matrix with four rows and four columns.

15. The method according to any one of claims 10 to 12, wherein the quantity of transmit ports of the CSIRS is 8, and the quantity of digital channels is 2.

16. The method according to claim 15, wherein the quantity of rows of the first weight matrix is 2, the quantity of columns of the first weight matrix is 8, and the first weight matrix is:

$$\left[\begin{bmatrix} 1 & e^{j(\Delta_1)} & e^{j(\Delta_2)} & e^{j(\Delta_2)}e^{j(\Delta_1)} \\ 0 & 0 & 0 & 0 \end{bmatrix} \quad \begin{bmatrix} 0 & 0 & 0 & 0 \\ 1 & -e^{j(\Delta_1)} & -e^{j(\Delta_2)} & e^{j(\Delta_1)}e^{j(\Delta_2)} \end{bmatrix}\right].$$

17. A communication apparatus, comprising a module configured to perform the method according to any one of claims 1 to 9, or comprising a module configured to perform the method according to any one of claims 10 to 16.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 9 through a logic circuit or by executing code instructions, or the processor is configured to implement the method according to any one of claims 10 to 16 through a logic circuit or by executing code instructions.

19. A computer-readable storage medium, wherein the storage medium stores a computer program or instructions, and when the computer program or the instructions are executed by a communication apparatus, the communication apparatus is caused to implement the method according to any one of claims 1 to 9, or to implement the method according to any one of claims 10 to 16.

20. A computer program product, wherein the computer program product comprises a computer program or instructions, and when the computer program or the instructions are executed by a communication apparatus, the communication apparatus is caused to implement the method according to any one of claims 1 to 9, or to implement the method according to any one of claims 10 to 16.

FIG. 1

S201: CSIRS processed by using a first weight matrix

S202: Measure the CSIRS to obtain CSI

S203: CSI

Network device

Terminal device

FIG. 2

FIG. 3

FIG. 4

## INTERNATIONAL SEARCH REPORT

| International application No. |
|---|
| **PCT/CN2024/115623** |

| A. | CLASSIFICATION OF SUBJECT MATTER |
|---|---|
| | H04B7/0456(2017.01)i; H04B7/06(2006.01)i |

According to International Patent Classification (IPC) or to both national classification and IPC

| B. | FIELDS SEARCHED |
|---|---|

Minimum documentation searched (classification system followed by classification symbols)

    IPC: H04B

Documentation searched other than minimum documentation to the extent that such documents are included in the fields searched

Electronic data base consulted during the international search (name of data base and, where practicable, search terms used)

    CNTXT; CNKI; VEN; ENTXT; USTXT; WOTXT; EPTXT; 3GPP: 多输入多输出, 信道状态信息, 参考信号, 权值矩阵, 加权矩阵, 检测矩阵, 矩阵, 维度, 行, 列, MIMO, CSI, channel state information, RS, reference signal, weight+, matrix

| C. | DOCUMENTS CONSIDERED TO BE RELEVANT | |
|---|---|---|
| Category* | Citation of document, with indication, where appropriate, of the relevant passages | Relevant to claim No. |
| A | CN 115882910 A (SHANGHAI HUAWEI TECHNOLOGIES CO., LTD.) 31 March 2023 (2023-03-31)<br>    description, paragraphs [0005]-[0042] and [0113]-[0144] | 1-20 |
| A | CN 115118555 A (HUAWEI TECHNOLOGIES CO., LTD.) 27 September 2022 (2022-09-27)<br>    description, paragraphs [0070]-[0125] | 1-20 |
| A | WO 2017127987 A1 (HUAWEI TECHNOLOGIES CO., LTD.) 03 August 2017 (2017-08-03)<br>    entire document | 1-20 |
| A | CN 106033989 A (CHINA ACADEMY OF TELECOMMUNICATIONS TECHNOLOGY) 19 October 2016 (2016-10-19)<br>    entire document | 1-20 |
| A | US 2018062711 A1 (SONY CORP.) 01 March 2018 (2018-03-01)<br>    entire document | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | "Y" | document of particular relevance; the claimed invention cannot be considered to involve an inventive step when the document is combined with one or more other such documents, such combination being obvious to a person skilled in the art |
| "L" | document which may throw doubts on priority claim(s) or which is cited to establish the publication date of another citation or other special reason (as specified) | | |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2024** | **21 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/115623**

| Patent document cited in search report | | | Publication date (day/month/year) | Patent family member(s) | | | Publication date (day/month/year) |
|---|---|---|---|---|---|---|---|
| CN | 115882910 | A | 31 March 2023 | None | | | |
| CN | 115118555 | A | 27 September 2022 | None | | | |
| WO | 2017127987 | A1 | 03 August 2017 | None | | | |
| CN | 106033989 | A | 19 October 2016 | WO | 2016141782 | A1 | 15 September 2016 |
| | | | | US | 2018062722 | A1 | 01 March 2018 |
| | | | | US | 10014922 | B2 | 03 July 2018 |
| | | | | TW | 201633737 | A | 16 September 2016 |
| | | | | TWI | 595759 | B | 11 August 2017 |
| | | | | EP | 3270524 | A1 | 17 January 2018 |
| | | | | EP | 3270524 | A4 | 07 March 2018 |
| | | | | EP | 3270524 | B1 | 15 January 2020 |
| US | 2018062711 | A1 | 01 March 2018 | WO | 2016189990 | A1 | 01 December 2016 |
| | | | | US | 10530432 | B2 | 07 January 2020 |
| | | | | US | 2020091972 | A1 | 19 March 2020 |
| | | | | US | 10998947 | B2 | 04 May 2021 |
| | | | | EP | 3306843 | A1 | 11 April 2018 |
| | | | | EP | 3306843 | A4 | 17 April 2019 |
| | | | | EP | 3306843 | B1 | 05 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311283590